Europäisches Patentamt

European Patent Office

Office européen des brevets

(11) Publication number: **0 388 385**
**A1**

## EUROPEAN PATENT APPLICATION

(21) Application number: 90850089.5

(22) Date of filing: 05.03.90

(51) Int. Cl.⁵: **B01D 46/52, B01D 46/42**

(30) Priority: 15.03.89 SE 8900928

(43) Date of publication of application:
**19.09.90 Bulletin 90/38**

(84) Designated Contracting States:
**DE GB SE**

(71) Applicant: **AKTIEBOLAGET ELECTROLUX**
**Luxbacken 1**
**S-105 45 Stockholm(SE)**

(72) Inventor: **Jarl, Kurt Gösta Sigurd**
**Silvakragatan 81**
**S-252 57 Helsingborg(SE)**

(74) Representative: **Hagelbäck, Evert Isidor et al**
**c/o AB Electrolux Corporate Patents &**
**Trademarks**
**S-105 45 Stockholm(SE)**

(54) **Cleaning device for a filter.**

(57) This invention relates to a device for cleaning a filter which is used for separating particles from a flowing medium, the filter (14) comprising a folded or corrugated surface against which the medium flows. The filter (14) is flat and adjacent the filter there is a mean (17) which engages the filter and is arranged to be moved parallel to the filter. By this arrangement it is possible to clean the filter without picking it out from the apparatus where it is applied.

Fig.1

## Cleaning device for a filter

This invention relates to a device for cleaning a flat filter which is used for separating particles from a flowing medium, the filter comprising a folded or corrugated surface against which the medium flows.

Filters of said type are used for evacuating - devices of different types i.e. for evacuating welding smoke in working premises. The smoke-air-mixture which comprises particles is caused to flow through a mechanical separation stage before it reaches the filter where the major part of the particles are separated. Further cleaning of the smoke can take place by using one or several finer filters. A drawback with said devices is that it usually is troublesome and time-consuming to clean the filter which means that the filters often are thrown away when they have been clogged.

Filter cleaning devices comprising beating or brush elements to loose the particles from the filter surface are previously known see i.e. US 2.615.518, DE 2.720.610 or AU 25506/84. These devices are however rather complicated since they are adapted to cooperate with filters of very specific types.

The purpose of this invention is to create a device making it possible to clean a flat filter having a folded or corrugated surface area without taking it out from the apparatus where the filter is placed.

This is achieved by means of a device which has the characteristics given in the claims.

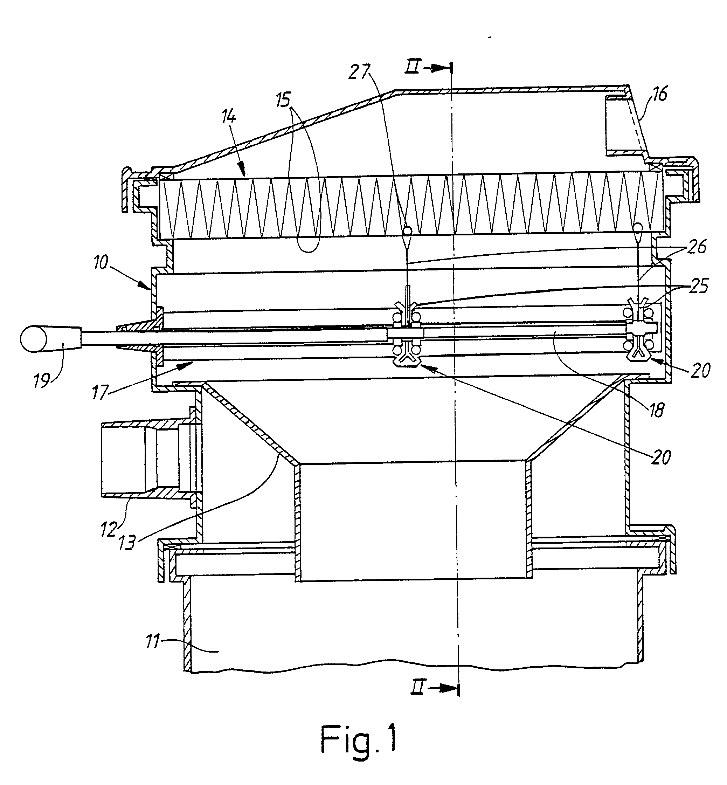

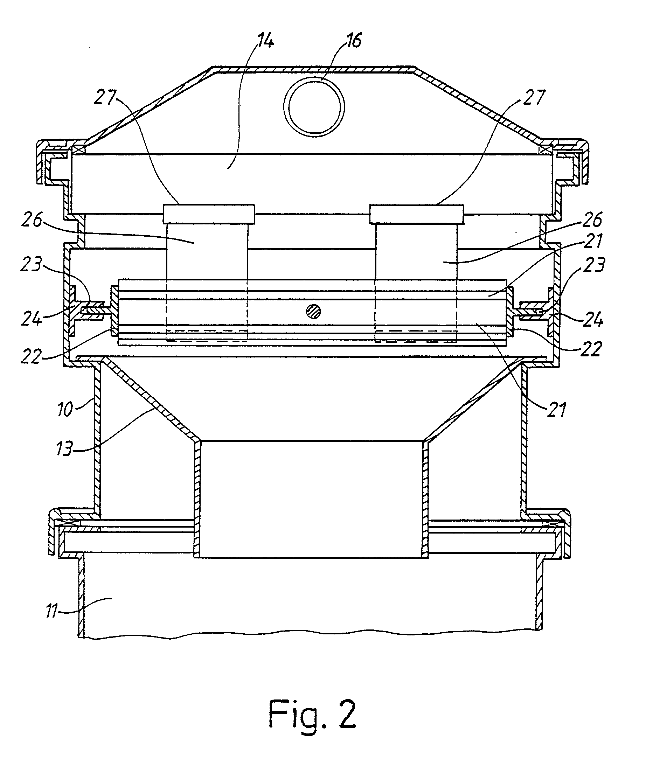

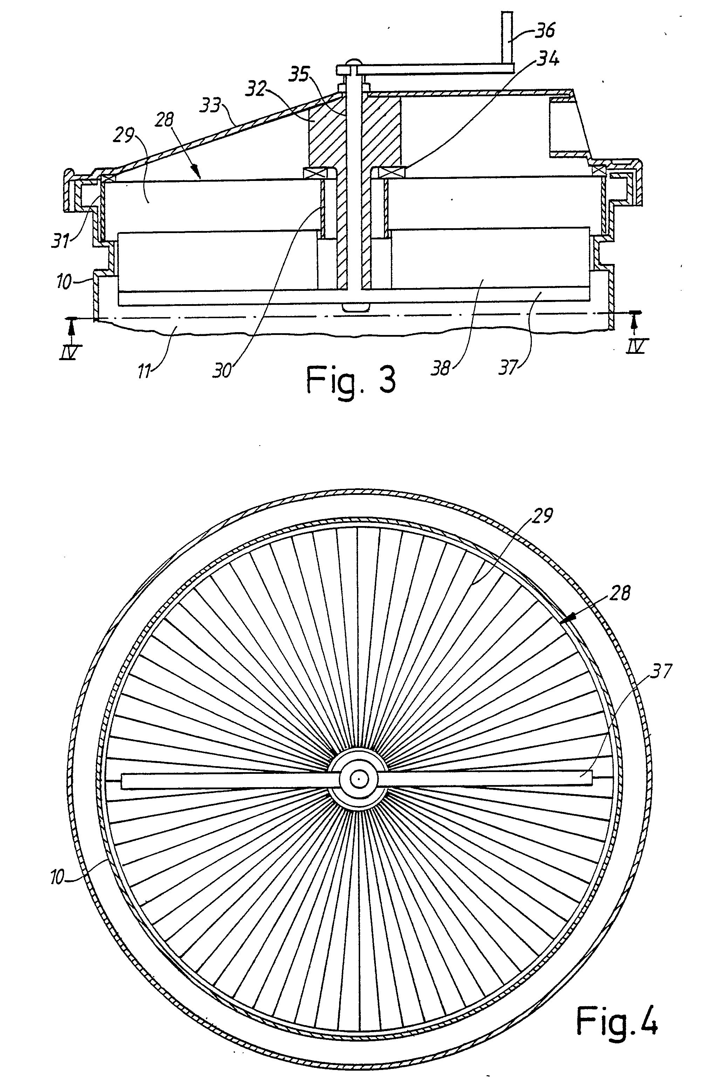

Two embodiments of the invention will now be described with reference to the enclosed drawings in which Fig. 1 is a vertical section through a first embodiment of an apparatus comprising said device, Fig. 2 is a section on the line II-II in Fig. 1, Fig. 3 is a vertical section through a second embodiment and Fig. 4 is a section on the line IV-IV in Fig. 3.

Fig. 1 shows an apparatus hood 10 enclosing a rectangular chamber 11 having an inlet 12 for a gaseous medium the inlet being associated with a hose, not shown, which is connected to a nozzle or the like. Through the inlet the gas which is mixed with particles flows horizontally into the chamber. Centrally in the chamber there is a hopper-like shell 13 which is placed at the same level as the inlet 12 so that a vertical flow channel is formed for the medium. Above the shell 13 there is a filter 14. The filter is rectangular and covers the complete flow-through opening and comprises several folds or corrugations 15 so that the tips of the folds on corrugations are mainly situated in a common plane. Above the filter 14 there is an outlet 16 to which a hose, not shown, can be coupled this hose being connected to an underatmospheric source possibly via one or several additional finer filters.

Between the filter 14 and the shell 13 there is a filter cleaning device 17. This device comprises a rod 18 which is movable parallel with the filter plane one end of the rod extending outside the hood 10 and supporting a knob 19 which can be acted on manually. The rod 18 is further associated with two slide members 20 each comprising four bars 21 extending perpendicular to the rod and joining two T-shaped supports 22 which are slidably arranged in a groove 23 belonging to a profile 24 fastened at each side of the member 20. Between the bars there is a clamping means 25 for vertical tongues 26 of a rather stiff but flexible material which at its upper part has a bead 27 which engages the lower tips of the corrugation or the folds 15.

The device operates in the following way. The gaseous medium which flows through the inlet 12 is first forced to flow downwards in the chamber 11 whereby heavier particles drop down and are collected at the bottom of the chamber. The air then flows vertically upwards through the central open part of the shell 13 and further through the filter 14 to the outlet 16. When passing the filter 14 the major part of remaining particles are collected on the downwards facing filter area which will clog gradually. When the flow resistance through the filter becomes to large the rod 18 is acted on by moving the knob 20 back and forth which means that the tongues 26 engage the folds or corrugating so that they achieve a vibrating movement which looses the particles from the filter surface. These particles drop down through the opening in the shell 13 to the bottom of the chamber 11 and are collected there together with the heavy particles. The filter 14 is then again ready to be used.

By using several slide members with tongues for acting on the filter by one single rod the necessary length of movement of the rod for acting on the complete filter is reduced.

The device described in Fig. 3 and 4 is placed in mainly the same type of apparatus as described with reference to Fig. 1 and 2. The only difference is that the chamber and associated parts have a circular section. The device comprises a circular flat filter 28 with folds or corrugations 29 extending radially from a central tubular wall 30 to a pheriperal wall 31 surrounding the filter. The wall 30 surrounds a hub 32 which is fixed to a cover 33 which is a part of the hood 10. There is a sealing means 34 between the hub 32 and the filter 28 preventing the medium from flowing beside the filter. The hub 32 supports a shaft 35 which is driven by a crank 36 accessible from the ouside of the apparatus. The lower part of the shaft 35 is provided with a horizontal arm 37 on which vertically extending tongues 38 are fixed. The tongues engage the lower tips of the folds or corrugations and by turning the crank a vibrating movement occurs which means that the particles collected in the filter fall down and are collected with the other particles at the bottom of the chamber 11.

It should be mentioned that it of course is possible to replace the crank by a motor for rotating the shaft. It is also possible to use an arrangement where the shaft is under the influence of a helical spring and is provided with a pulley on which a flexible line accessible from the outside of the machine is wound. By pulling the line the tongues rotate thereby engaging the fold- or corrugation-tips. When the line is released the spring then rotates the tongues in the opposite direction.

## Claims

1. Device for cleaning a filter (14, 28) which is used for separating particles from a flowing medium, the filter comprising a folded or corrugated surface against which the medium flows, **characterized** in that said filter is so arranged that the tips of the folds or corrugations are mainly situated in a common plane and that at least the tips of the folds or corrugations can be acted on by a means (26, 38) which is movable parallel to the plane and causes a vibrating movement of the folds or corrugations.

2. Device according to claim 1, **characterized** in that said means (26, 38) is movable perpendicular to the length direction of the folds or the corrugations.

3. Device according to claim 1 or 2, **characterized** in that the means (26, 38) is made of flexible material.

4. Device according to any one of the preceding claims, **characterized** in that the means (26, 38) is shaped as a tongue which is mainly perpendicular to the plane.

5. Device according to any of the preceding claims, **characterized** in that the means (26) is fastened on a member (20) which is movable back and forth and which is accessible from the outside of the machine or apparatus in which the filter (14) is applied.

6. Device according to claim 5, **characterized** in that the member (20) supports several tongues.

7. Device according to any of claims 1 - 4, **characterized** in that the means (38) is fastened on a member (37) which is supported for rotating movement about an axis which is perpendicular to the plane.

8. Device according to claim 7, **characterized** in that the member (37) is fixed to a shaft (35) extending in the length direction of the axis and being connected to a means for rotating the shaft i.e. a crank (36) accessible from the outside of the machine or apparatus in which the filter is placed.

9. Device according to claim 8, **characterized** in that the means for rotating the shaft is a motor.

10. Device according to claim 7, **characterized** in that the member (37) is fixed to a shaft (35) which is under the influence of a spring and which is provided with a flexible line accessible from the outside of the machine or apparatus in which the filter is placed so that the spring is loaded when the line is pulled out the member thereby rotating in one direction whereas the member rotates in the opposite direction under the influence of the spring when the line is not acted on any longer.

Fig.1

Fig. 2

Fig. 3

Fig.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-U-8 807 863 (ING. WALTER HENGST GmbH & CO. KG)<br>* Claims 1,3,4; figures 1,2 * | 1-5 | B 01 D 46/52<br>B 01 D 46/42 |
| X | DE-A-3 438 200 (Fa. ROBERT WELTER)<br>* Claim 1; figure 1 * | 1-4,6 | |
| X | US-A-4 006 033 (R.A. SCHEWE)<br>* Whole document * | 1-5,7-9 | |
| A | US-A-4 443 235 (D.L. BRENHOLT) | | |

TECHNICAL FIELDS
SEARCHED (Int. Cl.5)

B 01 D 46/00

The present search report has been drawn up for all claims

| Place of search | Date of completion of the search | Examiner |
|---|---|---|
| THE HAGUE | 28-06-1990 | POLESAK, H.F. |

EPO FORM 1503 03.82 (P0401)